# EUROPEAN PATENT APPLICATION

(11) **EP 4 091 933 A1**
(43) Date of publication of application: **23.11.2022**
(21) Application number: 21175051.8
(22) Date of filing: 20.05.2021
(51) Int. Cl.: B64C 21/06, B64C 21/08, B64C 3/18

(54) **AERODYNAMIC BODY FOR FLYING OBJECTS**

(71) Applicant: Deutsches Zentrum für Luft- und Raumfahrt e.V., 53227 Bonn-Oberkassel (DE); Aernnova Aerospace S.A.U., 01510 Minano (ES)
(72) Inventor: Kleineberg, Markus, 30966 Hemmingen (DE); Van de Kamp, Bram, 38118 Braunschweig (DE); Haase, Thomas, 38324 Kissenbrück (DE); Herrmann, Ulrich, 38108 Braunschweig (DE); Castillo Acero, Miguel Angel, 01510 Minano (ES); Cruz Palacios, David, 28050 Madrid (ES); Martin de La Escalera, Federico, 28050 Madrid (ES)
(74) Representative: Gramm, Lins & Partner Patent- und Rechtsanwälte PartGmbB

(57) **Abstract**

The invention relates to an aerodynamic body for flying objects having a hybrid laminar flow control, wherein the aerodynamic body comprises:
- a load bearing supporting structure (11) having at least one hollow chamber forming a low-pressure suction plenum (18);
- a perforated panel skin (20) arranged on the supporting structure of the aerodynamic body having an outer surface (23), the perforated panel skin has a plurality of openings being in fluid communication with the low-pressure suction plenum; and
- at least one compressor (40) having at least one inlet (41) and at least one outlet (42);
**characterized in that**
- the compressor is located inside the hollow chamber; and
- the inlet of the compressor protrudes into the low-pressure suction plenum and the outlet sticks out of the low-pressure suction plenum into an ambient pressure compartment so that a low-pressure within the low-pressure suction plenum established by the compressor results in air suction through the openings of the perforated panel skin.

## Description

The invention relates to an aerodynamic body for flying objects having a hybrid laminar flow control.

Hybrid laminar flow control (HLFC) systems have been developed for aircraft in an attempt to stabilize the laminar boundary layer and to prevent the transition from a laminar boundary layer flow to a turbulent boundary layer flow as long as possible. A laminar boundary layer flow at the outer flow surfaces of an aircraft can reduce the airframe drag resulting in reducing the fuel consumption and emissions of the aircraft.

These systems typically work by sucking on a small part of the boundary layer flow at the outer flow surface to maintain the laminar boundary layer flow. To realize that, the wing skin of the wing is perforated and forms a plurality of openings through the wing skin. The openings are in fluid communication with a suction system using a piping system to connect the openings with the suction system. The suction system applies a negative pressure within the piping system so that the air flow at the outer surface can be sucked.

GB 2566956 A discloses an aerodynamic structure comprising of a leading edge part fixed to the structural wing box front side. An air inlet on the leading edge part surface enables air flow into the aerodynamic structure interior. A spanwise extending duct is comprised within the wing box and fluidly connects the air inlet to an air outlet. The outlet is spaced apart from the inlet along a spanwise direction. The aerodynamic structure comprises a porous skin portion, wherein the inlet comprises pores or holes. The duct may be comprised in a hybrid laminar flow control system or boundary layer control system for sucking air into the inlet and expelling air out from the outlet during flight.

The disadvantage of this system is that the size, complexity, weight and cost of such suction systems are the main reason that prevent a broad application. In addition, the maintenance effort is extremely high because accessibility of the different system components of the suction system is very limited and exchanging the system is both time consuming and expensive. Furthermore, sealing the low pressure areas is demanding due to the high number of suction components involved in the system and the amount of dedicated vacuum tight joints.

In US 8,783,624 B2, a passive suction system for aerodynamic wings is proposed. At an inner surface of the wing skin, a plurality of pipes are arranged which are in fluid communication with the outer area of the wing skin. However, a passive suction system for laminar flow control is not enough to reach a sufficient laminar boundary layer flow.

Therefore, it is an object of the present invention to provide a better hybrid laminar flow control system for flying object with less size, complexity and weight.

According to claim 1, an aerodynamic body for flying objects having a hybrid laminar flow control is proposed. The aerodynamic body comprises a load bearing supporting structure having at least one hollow chamber forming a low-pressure suction plenum. Such load bearing supporting structures of aerodynamic bodies are wing boxes to hold and bear the wing skin of the aerodynamic body.

Further, the aerodynamic body comprises a perforated panel skin arranged on the supporting structure of the aerodynamic body having an outer surface, the perforated panel skin has a plurality of openings being in fluid communication with the low-pressure suction plenum. If a negative pressure is applied to the low-pressure suction plenum, air from the area of the outer surface of the perforated panel skin is sucked into low-pressure suction plenum. This allows the necessary amount of the boundary layer at the outer surface of the perforated panel skin to be extracted.

Furthermore, the aerodynamic body comprises at least one compressor having at least one inlet and at least one outlet. The compressor is arranged to suck in air through the inlet and blow the air out through the outlet to apply a negative pressure in a room that communicates with the inlet.

In accordance to the invention, the compressor is located inside the hollow chamber respectively inside the low-pressure suction plenum and the inlet of the compressor protrudes into the low-pressure suction plenum and the outlet sticks out of the low-pressure suction plenum into an ambient pressure compartment so that a low-pressure within the low-pressure suction plenum established by the compressor results in air suction through the openings of the perforated panel skin.

The present invention provides a hybrid laminar flow control without any pipes or valves. This results in weight and cost savings and brings a hybrid laminar flow control into a broad application. The aerodynamic body has no pips or ducts which are used for the hybrid laminar flow control to guide the air sucked in.

The main advantage of the present invention is to avoid piping or ducting in the inner body structure. This has been accomplished by integrating the compressor in the load bearing supporting structure. The low-pressure suction plenum is an integral part of the supporting structure, which solves the sealing problem for the complex interface plane between panel skin and suction plenum. The compressor has its intake in the suction plenum and may be mounted on or in the vicinity of a service access panel (access door). The outlet of the compressor sticks out of the low pressure plenum into the ambient pressure compartment (where e.g. the Krüger flap is located).

If the compressor needs to be inspected or exchanged, this can easily be done by simply removing the service access panel giving the access to the compressor. The suction plenum is connected to the perforated panel skin to let flow the air from the outer boundary layer of the perforated panel skin into the suction plenum by the compressor. This airflow is blow out into the ambient pressure compartment. The compressor is arranged to establish a negative pressure within the suction plenum of the hollow chamber to suction the air from the boundary layer of the outer surface of the perforated panel skin.

In an embodiment, the aerodynamic body is a leading edge of a wing or a control surface of the flying object. The leading edge of a wing is suitable for hybrid laminar flow control. The low-pressure suction plenum is an integral part of the supporting structure of the leading edge of the wing, wherein the compressor is integrated in the hollow chamber respectively in the low-pressure suction plenum.

In an embodiment, the perforated panel skin is an integral part of the supporting structure.

In an alternative embodiment, the perforated panel skin has an inner surface opposite to the outer surface, wherein a plurality of spacer connected to the inner surface of the perforated panel skin and connected to the load bearing supporting structure are provided to form an intermediate hollow chamber between the perforated panel skin and the load bearing supporting structure, the intermediate hollow chamber is in fluid communication with said at least one hollow chamber forming the low-pressure suction plenum.

The spacer could be an integral part of the perforated panel skin. The spacers are connected to the load bearing supporting structure. To enable easy inspection or replacement of the perforated panel skin, the perforated panel skin is bolted to the load bearing supporting structure. The bolts are loosened from the inside of the load bearing supporting structure to avoid any surface roughness on the outside surface of the perforated panel skin.

The intermediate hollow chamber is connected to the suction plenum through holes in the hollow chamber of the load bearing supporting structure. For example, the spanwise airflow is established in the spanwise intermediate chamber between the perforated panel skin and load bearing supporting structure, wherein the hollow chamber respectively the low-pressure suction plenum has no spanwise extension.

There, in an embodiment hereto, the planar extent in at least one direction of the intermediate hollow chamber is greater than the planar extent of the hollow chamber forming the low-pressure suction plenum.

That realizes a spanwise suction airflow at the outside of the perforated panel skin in conjunction with a small hollow chamber to build the low-pressure suction plenum. This reduces the complexity and construction space used for the hybrid laminar flow control components.

In an embodiment, the hollow chamber forming the low-pressure suction plenum is an integral part of a wing box of the aerodynamic body.

In an embodiment, the hollow chamber forming the low-pressure suction plenum is delimited by wing ribs of the wing box, by a skin of the wing box and by a bulkhead. The hollow chamber forming the low-pressure suction plenum can be a part of a hollow rib which has a wing rib on a first side (e.g. left side) and a wing rib on a second opposite side (e.g. right side), wherein an inner skin panel between the first and the second wing rib covers the hollow chamber. The inner skin panel forms a third side (e.g. upper side) and a forth side (e.g. lower side), wherein the third side and the forth side connected at a leading edge. At the opposite of the leading edge, the hollow chamber is closed by a bulkhead.

The hollow chamber can be installed later as a part of a retrofitting of the flying object. To add the bulkhead closes the hollow chamber.

The invention is explained in more detail using the attached figure.

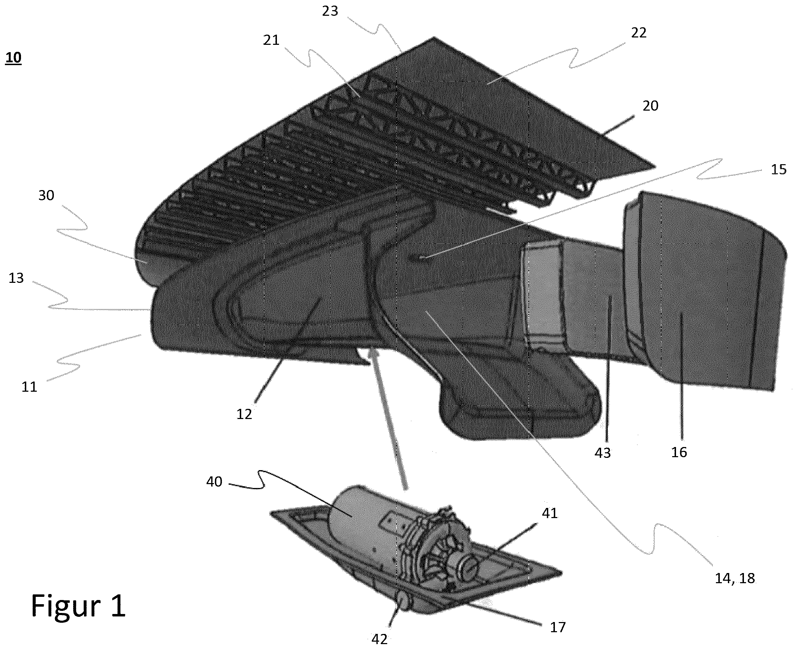

- Figure 1: Representation of a pipeless HLFC Wing with integrated suction plenum and compressor.

Figure 1 shows a part of a leading edge 10 of a wing of an aircraft in an explosion representation. The leading edge 10 comprises a load bearing supporting structure 11 (e.g. a wing box), which provide a proper stabilization construction in spanwise direction to bear and hold the wing in the appropriate form and position.

The wing has a plurality of wing ribs 12 which are distributed in spanwise direction. The wing ribs 12 extend into the leading edge 10, wherein the wing ribs 12 are covered by an inner wing skin 13. Based on the inner wing skin 13, a cavity 14 is formed in the leading edge 10 between two adjacent wing ribs 12.

Further, the inventive leading edge 10 has a perforated panel skin 20, which are arranged on the inner wing skin 13 of the load bearing supporting structure 11. The perforated panel skin 20 comprises a plurality of spacer or spacer elements 21. The spacer 21 are connected on an inner surface 22 of the perforated panel skin 20 so that the spacer 21 aligned to the inner wing skin 13. In opposite to the inner surface 22 of the perforated panel skin 20, the perforated panel skin 20 comprises an outer surface 23 which forms an outer or external flow surface 23 of the aerodynamic profile.

If the perforated panel skin 20 is attached to the load bearing supporting structure 11 using the spacer 21, an intermediate hollow chamber or cavity 30 is formed within the leading edge 10. To avoid any surface roughness on the external flow surface 23 of the perforated panel skin 20 as well as to enable an easy inspection and/or replacement of the perforated panel skin 20, the panel skin 20 is bolted to the load bearing supporting structure 11 with bolts being loosened from the inside of the cavity 14.

The perforated panel skin 20 has a plurality of openings (not shown) which are arranged to let air from the area of the outer surface 23 into the intermediate hollow chamber 30 between the perforated panel skin 20 and the inner wing skin 13.

Furthermore, at least one opening is provided in the inner wing skin 13 within the cavity 14 so that an airflow communication is established between the intermediate hollow chamber 30 and the cavity 14 of the load bearing supporting structure 11. Therefore, an airflow from the area of the outer surface 23 (boundary layer) can be sucked through the intermediate hollow chamber 30 into the cavity 14.

The cavity 14 is closed at the backside with a bulkhead 16. The bulkhead 16 has a gasket for (semi) vacuum tight-sealing of the cavity 14 so that a hollow chamber 18 forming a low-pressure suction plenum is established.

An access door 17 at a lower side of the load bearing supporting structure 11 is provided. The access door 17 is placed within the cavity 14 to open and close the cavity 14. In an open position, the cavity has an access opening to get an access inside the cavity 14. In a close position, the cavity is (semi) vacuum tight sealed.

On the access door 17, a compressor 40 is installed. The compressor 40 has an inlet 41 to suck in air from the (semi) vacuum tight-sealed cavity 14 respectively from the hollow chamber 18 forming the low-pressure suction plenum. Further, the compressor 40 has an outlet 42 to blow out the air in an ambient pressure compartment (not shown) which was former sucked in through the inlet 41.

In a close position of the access door 17, the outlet 42 of the compressor 40 sticks out of the (semi) vacuum tight-sealed cavity 14 respectively of the hollow chamber 18 forming the low-pressure suction plenum into the ambient pressure compartment.

To supply the compressor 40 with electrical energy, the compressor is electrical connected with an inverter 43. In the embodiment of figure 1, the inverter 43 is arranged within hollow chamber 18 ahead the bulkhead 16. An access to the inverter 41 is provided by opening the access door 17.

If the compressor 40 is working, air form the hollow chamber 18 forming the low-pressure suction plenum is sucked in from the inlet 41 and blown out from the outlet 42. Hence, a negative air-pressure is established within the hollow chamber 18.

Based on the negative air-pressure established within the hollow chamber 18, an airflow from the intermediate hollow chamber 30 (between the perforated panel skin 20 and the inner wing skin 12) through the opening 15 in the inner wing skin 12 is performed. That results in a negative pressure within the intermediate hollow chamber 30 so that an airflow through the openings of the perforated panel skin is established. Based on this airflow, the necessary amount of the boundary layer at the outer surface of the perforated panel skin is sucked in and a laminar boundary layer is maintained for a significant portion of the wing chord.

The perforated panel skin 20 extends in spanwise direction and forms an intermediate hollow chamber which is bigger in spanwise direction than the hollow chamber 18 forming the low-pressure suction plenum.

As a result, boundary layer suction at the outer surface can be implemented over the entire spanwise section by means of only one small chamber with one compressor. That reduces the complexity, weight and cost. No pipes or ducts are needed.

### References

- 10: leading edge
- 11: load bearing supporting structure
- 12: wing ribs
- 13: inner wing skin
- 14: cavity within the load bearing supporting structure
- 15: opening in the inner wing skin
- 16: bulkhead
- 17: access door
- 18: hollow chamber forming the low-pressure suction plenum
- 20: perforated panel skin
- 21: spacer
- 22: inner surface of the perforated panel skin
- 23: outer surface of the perforated panel skin
- 30: intermediate hollow chamber
- 40: compressor
- 41: inlet
- 42: outlet
- 43: inverter

## Claims

1. Aerodynamic body for flying objects having a hybrid laminar flow control, wherein the aerodynamic body comprises:
- a load bearing supporting structure having at least one hollow chamber forming a low-pressure suction plenum (18);
- a perforated panel skin (20) arranged on the supporting structure of the aerodynamic body having an outer surface (23), the perforated panel skin (20) has a plurality of openings being in fluid communication with the low-pressure suction plenum; and
- at least one compressor (40) having at least one inlet (41) and at least one outlet (42);
**characterized in that**
- the compressor (40) is located inside the hollow chamber; and
- the inlet (41) of the compressor (40) protrudes into the low-pressure suction plenum and the outlet (42) sticks out of the low-pressure suction plenum into an ambient pressure compartment so that a low-pressure within the low-pressure suction plenum established by the compressor (40) results in air suction through the openings of the perforated panel skin (20).

2. Aerodynamic body according to claim 1, wherein the aerodynamic body is a leading edge (10) of a wing or a control surface of the flying object.

3. Aerodynamic body according to claim 1 or 2, wherein the perforated panel skin (20) is an integral part of the supporting structure.

4. Aerodynamic body according to claim 1 or 2, wherein the perforated panel skin (20) has an inner surface (22) opposite to the outer surface (23), wherein a plurality of spacer (21) connected to the inner surface (22) of the perforated panel skin (20) and connected to the load bearing supporting structure (11) are provided to form an intermediate hollow chamber (30) between the perforated panel skin (20) and the load bearing supporting structure (11), the intermediate hollow chamber (30) is in fluid communication with the at least one hollow chamber forming the low-pressure suction plenum (18).

5. Aerodynamic body according to claim 4, wherein the planar extent in at least one direction of the intermediate hollow chamber (30) is greater than the planar extent of the hollow chamber forming the low-pressure suction plenum (18).

6. Aerodynamic body according to one of the claims 1 to 5, wherein the hollow chamber forming the low-pressure suction plenum (18) is an integral part of a wing box of the aerodynamic body.

7. Aerodynamic body according to claim 6, wherein the hollow chamber forming the low-pressure suction plenum (18) is delimited by wing ribs (12) of the wing box, by a skin of the wing box and by a bulkhead (16).
